# EUROPÄISCHE PATENTSCHRIFT

(11) **EP 0 621 152 B1**
(45) Veröffentlichungstag und Bekanntmachung des Hinweises auf die Patenterteilung: **24.07.1996**
(21) Anmeldenummer: 94101610.7
(22) Anmeldetag: 03.02.1994
(51) Int. Cl.: B60K 6/10, F16D 21/08, F02N 11/04

(54) **Antriebsanordnung für Kraftfahrzeuge, insbesondere mit Hybridantrieb**
Drive arrangement for motor vehicles, especially with hybrid drive
Dispositif d'entraînement pour véhicules à moteur, notamment avec propulsion hybride

(30) Priorität: 08.04.1993 DE 4311697
(43) Veröffentlichungstag der Anmeldung: 26.10.1994
(73) Patentinhaber: Bayerische Motoren Werke Aktiengesellschaft, 80788 München (DE)
(72) Erfinder: Fickenscher, Fritz, D-80809 München (DE); Fickel, Hans-Christian, D-85368 Moosburg (DE)

(56) Entgegenhaltungen:
- DE-A- 3 243 514
- GB-A- 2 078 016

## Beschreibung

Die Erfindung geht gemäß dem Oberbegriff des Patentanspruches 1 von der DE-A 32 43 514 aus.

Bei dieser bekannten Antriebsanordnung ist die brennkraftmaschinenferne zweite Trennkupplung im Außendurchmesser gegenüber der brennkraftmaschinenseitigen ersten Trennkupplung kleiner gestaltet zur Anordnung der Elektro-Maschine mit einem am Zwischenflansch angeordneten Stator. Da der Rotor der Elektro-Maschine über die Stirnseite des Kupplungsdeckels der ersten Trennkupplung mit dieser in drehfester Verbindung steht, ergibt sich zwar eine axial relativ kurzbauende Doppelkuppelanordnung, deren Betätigung einschließlich einer betriebsartbedingten Freigangmöglichkeit der ersten brennkraftmaschinenseitigen Trennkupplung jedoch bauaufwendig ist.

Der Erfindung liegt die Aufgabe zugrunde, die gattungsgemäße Antriebsanordnung bei einfachem Aufbau so auszubilden, daß mit im wesentlichen baugleichen Kupplungseinrichtungen der Zwischenflansch mit der Elektro-Maschine eine derartige Montageeinheit bildet, daß bei fehlender Montageeinheit eine Serien-Brennkraftmaschine mit einem Serienwechselgetriebe unmittelbar verblockbar ist.

Diese Aufgabe wird mit den kennzeichnenden Mitteln des Patentanspruches 1 gelöst. Nach dem Kern der Erfindung kennzeichnet sich der Zwischenflansch durch zwei zueinander axial über ein konzentrische Hülse versetzt angeordnete Ringflansche, wobei die Hülse außenumfänglich der drehbeweglichen Anordnung des Rotors der Elektro-Maschine dient und der innere Ringflansch als Träger einer Ausrückeinrichtung für eine der Trennkupplungen vorgesehen ist. Eine kurzbauende Anordnung wird in vorteilhafter Weise dadurch erreicht, daß der Zwischenflansch mit dem ersten, konzentrisch äußeren Ringflansch der brennkraftmaschinenseitigen Trennkupplung benachbart angeordnet ist und daß am zweiten Ringflansch eine in der Hülse der brennkraftmaschinenseitigen Trennkupplung zugewandt angeordnete, hydraulisch betätigbare Ausrückeinrichtung vorgesehen ist. Der Vorteil dieser Anordnung ist, daß die durch die axiale Abmessung der Elektro-Maschine in ihrer axialen Erstreckung bestimmte Hülse in ihrem Innenraum eine kompakte, robust bauende hydraulische Ausrückeinrichtung aufnehmen kann. Diese Anordnung bietet ferner den Vorteil einer in den Ringflanschen und der Hülse integriert angeordneten Steuerleitung, die einen in der Gehäusewandung des Zwischenflansches vorgesehenen Anschluß mit der Ausrückeinrichtung verbindet.

In weiterer Ausgestaltung des Zwischenflansches ist der Rotor der Elektro-Maschine mittelbar über einen Bundring auf der Hülse wälzgelagert, wobei der einerseits den Rotor der Elektro-Maschine tragende Bundring andererseits die zweite, wechselgetriebeseitige Trennkupplung trägt und der Bundring schließlich mit der Brennkraftmaschine in Antriebsverbindung steht.

In bevorzugter Ausgestaltung dieser Antriebsverbindung umfaßt der Bundring eine biegeelastische Antriebsscheibe, die im Außenumfangsbereich über den Bundring mit einem axial unbeweglichen, mit dem Bundring drehfest verbundenen Bundring der wechselgetriebeseitigen Trennkupplung und die im Mittenbereich mit einer relativ zu einer Eingangswelle des Wechselgetriebes zentrierten Zwischenwelle jeweils in drehfester Verbindung steht, wobei die brennkraftmaschinenseitig in einer Kurbelwelle zentriert angeordnete Zwischenwelle mit einer Kupplungsbeläge tragenden Kupplungsscheibe der ersten kurbelwellenseitigen Trennkupplung in drehfester Verbindung steht. In zusätzlicher Ausgestaltung der wechselgetriebeseitigen Trennkupplung mit einer Kupplungsbeläge tragenden Kupplungsscheibe auf der Eingangswelle des Wechselgetriebes ergibt sich mit der erfindungsgemäß ausgebildeten Anordnung der Vorteil von im wesentlichen baugleich ausgebildeten Trennkupplungen. Diese baugleiche Ausführung der Trennkupplungen wird wesentlich weiter dadurch unterstützt, daß ein mit der Kurbelwelle drehfest verbundenes Schwungrad als axial unbeweglicher Druckring der kurbelwellenseitigen Trennkupplung dient.

Wird in weiterer Ausgestaltung der wechselgetriebeseitigen Trennkupplung eine zur Getriebe-Eingangswelle am Getriebegehäuse konzentrisch angeordnete, hydraulisch betätigbare Ausrückeinrichtung zugeordnet, die zumindest mit der ersten hydraulisch betätigbaren Ausrückeinrichtung in den axialen Abmessungen identisch ist, so wird hiermit in vorteilhafter Weise eine weitere Bauteilgleichheit erreicht, die einem einfachen Aufbau dient.

Dient schließlich der in Ausgangsposition gemessene axiale Abstand der im wesentlichen identischen Ausrückeinrichtungen als axiales Abstandsmaß für die Anschluß-Stirnseiten des Zwischenflansches, so kann dieser in vorteilhafter Weise mit dem Elektro-Maschinen-Rotor, der getriebeseitigen Trennkupplung, der Antriebsscheibe mit Zwischenwelle und der brennkraftmaschinenseitig orientierten Ausrückeinrichtung eine Montageeinheit bilden. Diese Montageeinheit macht es aber in Verbindung mit den bauteilgleichen Trennkupplungen auch möglich, daß eine in Serie hergestellte Brennkraftmaschine mit einem in Serie hergestellten Wechselgetriebe unter Fortfall der Montageeinheit direkt miteinander verblockbar ist. Die Erfindung ermöglicht es somit in vorteilhafter Weise, aus einer bekannten Brenkraftmaschine-Getriebeanordnung durch Zwischenschaltung der vorgenannten Montageeinheit das Antriebsaggregat zu einem Hybridantrieb zu erweitern.

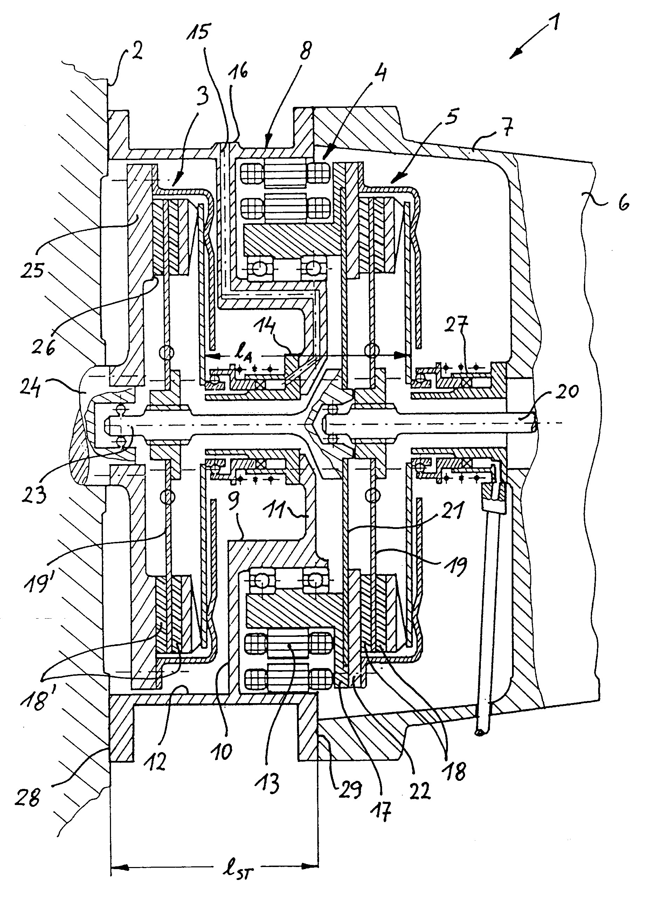

Die Erfindung ist anhand eines in der Zeichnung schematisch dargestellten Ausführungsbeispiels beschrieben.

Eine Antriebsanordnung mit einem Hybridantrieb 1 umfaßt in Reihe angeordnet eine Brennkraftmaschine 2, eine erste Trennkupplung 3, eine Elektro-Maschine 4, eine zweite Trennkupplung 5 sowie ein Wechselgetriebe 6. Das Wechselgetriebe 6 steht mit seinem Getriebegehäuse 7 mit der Brennkraftmaschine 2 über einen Zwischenflansch 8 in Verbindung. Der Zwischenflansch 8 weist im Inneren mittels einer Hülse 9 zueinander axial versetzt angeordnete Ringflansche 10 und 11 auf, wobei die vom ersten an der Gehäusewandung 12 des Zwischenflansches 8 angeordneten Ringflansch 10 getragene Hülse 9 außenumfänglich der drehbeweglichen Anordnung eines Rotors 13 der Elektro-Maschine 4 dient, deren Stator innenseitig am Zwischenflansch 8 angeordnet ist. Der an der Hülse 9 radial einwärts gerichtet angeordnete Ringflansch 11 dient als Träger einer Ausrückeinrichtung 14 für eine der Trennkupplungen 3, 5.

Zur Erzielung einer kurzbauenden Antriebsanordnung ist der Zwischenflansch 8 mit dem ersten Ringflansch 10 der brennkraftmaschinenseitigen, ersten Trennkupplung 3 benachbart angeordnet, wobei am zweiten Ringflansch 11 eine in der Hülse 9 der brennkraftmaschinenseitigen Trennkupplung 3 zugewandt angeordnete, hydraulisch betätigbare Ausrückeinrichtung 14 vorgesehen ist. Die hydraulisch betätigbare Ausrückeinrichtung 14 steht mit einer in den Ringflanschen 10 und 11 sowie in der Hülse 9 integriert angeordneten Steuerleitung 15 in Verbindung, wobei die Steuerleitung 15 einen in der Gehäusewandung 12 des Zwischenflansches 8 vorgesehenen Anschluß 16 aufweist.

Die integrierte Steuerleitung 15 erbringt neben einer hohen Betriebssicherheit den weiteren Vorteil eines vereinfachten Aufbaus der Antriebsanordnung.

Ein auf der konzentrischen Hülse 9 des Zwischenflansches 8 wälzgelagert angeordneter Bundring 17 steht über die erste Trennkupplung 3 mit der Brennkraftmaschine 2 in Antriebsverbindung. Der Bundring 17 trägt einerseits den Rotor 13 der Elektro-Maschine 4 und andererseits die zweite, wechselgetriebeseitige Trennkupplung 5, deren Kupplungsbeläge 18 tragende Kupplungsscheibe 19 mit der Eingangswelle 20 des Wechselgetriebes 6 in drehfester Verbindung steht. Zur Erzielung eines einfachen, kompakten Aufbaus umfaßt die Antriebsverbindung des Bundringes 17 eine biegeelastische Antriebsscheibe 21, die im Außenumfangsbereich über den Bundring 17 mit einem axial unbeweglichen, mit dem Bundring 17 drehfest verbundenen Druckring 22 der wechselgetriebeseitigen Trennkupplung 5 und im Mittenbereich mit einer relativ zur Eingangswelle 20 des Wechselgetriebes 6 zentrierten Zwischenwelle 23 jeweils in drehfester Verbindung steht, wobei die brennkraftmaschinenseitig in einer Kurbelwelle 24 der Brennkraftmaschine 2 zentriert angeordnete Zwischenwelle 23 mit einer Kupplungsbeläge 18' tragenden Kupplungsscheibe 19' der ersten Trennkupplung 3 in drehfester Verbindung steht.

Ein mit der Kurbelwelle 24 der Brennkraftmaschine 2 drehfest verbundenes Schwungrad dient für die erste, brennkraftmaschinenseitige Trennkupplung 3 als axial unbeweglicher Druckring 26. Die erfindungsgemäße Anordnung der wechselgetriebeseitigen Trennkupplung 5 am Bundring 17 ergibt mit der vorteilhaften Anordnung der Elektro-Maschine 4 zwischen den beiden Trennkupplungen 3 und 5 auch den Vorteil der Verwendung baugleicher Trennkupplungen 3 und 5, die bis auf die axial unbeweglichen Druckringe 22 und 26 als identische Bauteile zu gestalten sind.

Die Antriebsanordnung für den Hybridantrieb 1 vereinfacht sich weiter auch dadurch, daß die wechselgetriebeseitige Trennkupplung 5 mit einer zur Getriebe-Eingangswelle 20 am Getriebegehäuse 7 des Wechselgetriebes 6 konzentrisch angeordneten, weiteren hydraulisch betätigbaren Ausrückeinrichtung 27 zusammenwirkt. Wird zudem diese Ausrückeinrichtung 27 zumindest in ihren axialen Abmessungen mit denen der ersten Ausrückeinrichtung 14 identisch ausgeführt, ist eine weitere, im wesentlichen bauteilgleiche Ausbildung erzielt. Bei im wesentlichen identischen Ausrückeinrichtungen 14 und 27 für im wesentlichen identische Trennkupplungen 3 und 5 ist es besonders vorteilhaft, wenn das axiale Abstandsmaß l_{A} der beiden Ausrückeinrichtungen 14 und 27 bei geschlossenen Trennkupplungen 3 und 5 dem axialen Abstandsmaß l_{ST} der Anschluß-Stirnseiten 28 und 29 des Zwischenflansches 8 entspricht. Mit diesen Übereinstimmungen in den axialen Maßen ist es in vorteilhafter Weise möglich, daß der Zwischenflansch 8 mit der Elektro-Maschine 4, der wechselgetriebeseitigen Kupplung 5, der Antriebsscheibe 21 mit der Zwischenwelle 23 und der brennkraftmaschinenseitig orientierten Ausrückeinrichtung 14 eine Montageeinheit bildet. Da der erfindungsgemäß gestaltete Hybridantrieb 1 brennkraftmaschinenseitig mit einer üblichen Trennkupplung 3 ausgerüstet ist, kann bei Fortfall des als Montageeinheit gestalteten Zwischenflansches 8 das Wechselgetriebe 6 unmittelbar an der Brennkraftmaschine 2 verblockt werden, wobei die Getriebe-Eingangswelle 20 die Kupplungsscheibe 19' zur drehfesten Verbindung formschlüssig durchsetzt und schließlich in der Kurbelwelle 24 der Brennkraftmaschine 2 zentriert angeordnet ist.

Der erfindungsgemäß als Montageeinheit gestaltete Zwischenflansch 8 eröffnet in vorteilhafter Weise die Möglichkeit, eine serienmäßige Brennkraftmaschine 2 sowie ein hierzu geeignetes, serienmäßiges Wechselgetriebe 6 durch Zwischenschaltung des Zwischenflansches 8 zu einem Hybridantrieb 1 weiterzubilden. Denkbar ist aber auch den als Montageeinheit gestalteten Zwischenflansch 8 mit der Elektro-Maschine 4 als Starteinrichtung für die Brennkraftmaschine 2 vorzusehen.

## Patentansprüche

1. Antriebsanordnung für Kraftfahrzeug, insbesondere mit Hybridantrieb,
- umfassend in Reihe angeordnet eine Brennkraftmaschine (2), eine erste Trennkupplung (3), eine Elektro-Maschine (4), eine zweite Trennkupplung (5) sowie ein Wechselgetriebe (6), dessen
- Getriebegehäuse (7) über einen Zwischenflansch (8) mit der Brennkraftmaschine (2) in Verbindung steht, wobei,
- am Zwischenflansch (8) der Stator der Elektro-Maschine (4) angeordnet ist,
dadurch gekennzeichnet,
- daß der Zwischenflansch (8) im Inneren mittels einer Hülse (9) zueinander versetzt angeordnete Ringflansche (10, 11) aufweist, wobei
- die vom ersten, an der Gehäusewandung (12) des Zwischenflansches (8) angeordneten Ringflansch (10) getragene Hülse (9) außenumfänglich der drehbeweglichen Anordnung des Rotors (13) der Elektro-Maschine (4) dient und
- der an der Hülse (9) radial einwärts gerichtet angeordnete zweite Ringflansch (11) als Träger einer Ausrückeinrichtung (14) für eine der Trennkupplungen (3, 5) vorgesehen ist.

2. Antriebsanordnung nach Anspruch 1, dadurch gekennzeichnet,
- daß der Zwischenflansch (8) mit dem ersten Ringflansch (10) der brennkraftmaschinenseitigen, ersten Trennkupplung (3) benachbart zwischen Brennkraftmaschine (2) und Wechselgetriebe (6) angeordnet ist, wobei
- am zweiten Ringflansch (11) eine in der Hülse (9) der brennkraftmaschinenseitigen Trennkupplung (3) zugewandt angeordnete, hydraulisch betätigbare Ausrückeinrichtung (14) vorgesehen ist.

3. Antriebsanordnung nach Anspruch 1 und 2, dadurch gekennzeichnet,
- daß die hydraulisch betätigbare Ausrückeinrichtung (14) mit einer in den Ringflanschen (10, 11) und der Hülse (9) integriert angeordneten Steuerleitung (15) in Verbindung steht, die
- einen in der Gehäusewandung (12) des Zwischenflansches (8) vorgesehenen Anschluß (16) aufweist.

4. Antriebsanordnung nach den Ansprüchen 1 bis 3, dadurch gekennzeichnet,
- daß ein auf der Hülse (9) wälzgelagert angeordneter Bundring (17) über die erste Trennkupplung (3) mit der Brennkraftmaschine (2) in Antriebsverbindung steht, wobei
- der Bundring (17) einerseits den Rotor (13) der Elektro-Maschine (4) und andererseits die zweite, wechselgetriebeseitige Trennkupplung (5) trägt, deren
- Kupplungsbeläge (18) tragende Kupplungsscheibe (19) mit der Eingangswelle (20) des Wechselgetriebes (6) in drehfester Verbindung steht.

5. Antriebsanordnung nach den Ansprüchen 1 bis 4, dadurch gekennzeichnet,
- daß die Antriebsverbindung des Bundringes (17) eine biegeelastische Antriebsscheibe (21) umfaßt, die
- im Außenumfangsbereich über den Bundring (17) mit einem axial unbeweglichen, mit dem Bundring (17) drehfest verbundenen Druckring (22) der wechselgetriebeseitigen Trennkupplung (5) und im Mittenbereich mit einer relativ zur Eingangswelle (20) des Wechselgetriebes (6) zentrierten Zwischenwelle (23) jeweils in drehfester Verbindung steht, wobei
- die brennkraftmaschinenseitig in einer Kurbelwelle (24) zentriert angeordnete Zwischenwelle (23) mit einer Kupplungsbeläge (18') tragenden Kupplungsscheibe (19') der ersten Trennkupplung (3) in drehfester Verbindung steht.

6. Antriebsanordnung nach den Ansprüchen 1 bis 5, dadurch gekennzeichnet,
- daß ein mit der Kurbelwelle (24) drehfest verbundenes Schwungrad (25) als axial unbeweglicher Druckring (26) der ersten, brennkraftmaschinenseitigen Trennkupplung (3) dient und
- daß beide Trennkupplungen (3, 5) mit Ausnahme der axial unbeweglichen Druckringe (22, 26) als identische Bauteile gestaltet sind, wobei
- die wechselgetriebeseitige Trennkupplung (5) mit einer zur Getriebe-Eingangswelle (20) am Getriebegehäuse (7) konzentrisch angeordneten, hydraulisch betätigbaren Ausrückeinrichtung (27) zusammenwirkt.

7. Antriebsanordnung nach den Ansprüchen 1 bis 6, dadurch gekennzeichnet, daß die beiden hydraulisch betätigbaren Ausrückeinrichtungen (14, 27) zumindest in den axialen Abmessungen identisch sind.

8. Antriebsanordnung nach den Ansprüchen 1 bis 7, dadurch gekennzeichnet, daß das axiale Abstandsmaß (l_{ST}) der Anschluß-Stirnseiten (28, 29) des Zwischenflansches (8) dem axialen Abstandsmaß (l_{A}) der beiden Ausrückeinrichtung (14 und 27) bei geschlossenen Trennkupplungen (3, 5) entspricht.

9. Antriebsanordnung nach den Ansprüchen 1 bis 8, dadurch gekennzeichnet, daß der Zwischenflansch (8) mit der Elektro-Maschine (4), der wechselgetriebeseitigen Trennkupplung (5), der Antriebsscheibe (21) mit der Zwischenwelle (23) und der brennkraftmaschinenseitig orientiert angeordneten Ausrückeinrichtung (14) eine Montageeinheit bildet.

10. Antriebsanordnung nach einem oder mehreren der Ansprüche 5 bis 9, dadurch gekennzeichnet,
- daß die Antriebsverbindung des Bundringes (17) eine mit diesem drehfest verbundene, i.w. axial unbewegliche Druckplatte der wechselgetriebeseitigen Trennkupplung (5) umfaßt, wobei
- die Druckplatte mit der relativ zur Eingangswelle (20) des Wechselgetriebes (6) zentrierten Zwischenwelle (23) in drehfester Verbindung steht.

11. Antriebsanordnung nach einem oder mehreren der Ansprüche 4 bis 10, dadurch gekennzeichnet,
- daß der Stator der Elektro-Maschine (4) am Zwischenflansch (8) in dessen äußeren Ringflansch (10) derart angeordnet ist, daß
- der am Bundring (17) angeordnete Rotor (13) der Elektro-Maschine (4) einen Außenläufer bildet.

## Claims

1. A drive arrangement for a motor vehicle, especially with hybrid drive,
- comprising in sequential order an internal combustion engine (2), a first disconnectable clutch (3), an electric motor (4), a second disconnectable clutch (5) and a manual gearbox (6), with
- the gearbox housing (7) connected to the internal combustion engine (2) via an adapter flange (8), wherein
- the stator of the electric motor (4) is arranged on the adapter flange (8),
characterised in that
- the adapter flange (8) is internally provided via a sleeve (9) with two annular flanges (10, 11) displaced relative to each other, wherein
- the sleeve (9) borne by the first annular flange (10) arranged on the housing wall (12) of the adapter flange (8) facilitates at its outer circumference the rotational arrangement of the rotor (13) of the electric motor (4), and
- the second annular flange (11) arranged on the sleeve (9) and orientated radially inwards is provided as a support for a disengaging device (14) for one of the disconnectable clutches (3, 5).

2. A drive arrangement according to claim 1, characterised in that
- the adapter flange (8) with the first annular flange (10) of the first disconnectable clutch (3) on the internal combustion engine side is arranged adjacently between the internal combustion engine (2) and the manual gearbox (6), wherein
- a hydraulically-actuatable disengaging device (14) is provided on the second annular flange (11) facing the sleeve (9) of the disconnectable clutch (3) on the internal combustion engine side.

3. A drive arrangement according to claim 1 and claim 2, characterised in that
- the hydraulically-actuatable disengaging device (14) is connected to a control line (15) arranged integrated in the annular flanges (10, 11) and in the sleeve (9), with the said control line (15)
- provided with a connection (16) in the housing wall (12) of the adapter flange (8).

4. A drive arrangement according to any one of claims 1 to 3, characterised in that
- a collar (17) anti-frictionally arranged on the sleeve (9) is in drive connection with the internal combustion engine (2) via the first disconnectable clutch (3), whereby
- the collar (17) on the one hand bears the rotor (13) of the electric motor (4) and on the other hand the second disconnectable clutch (5) on the manual gearbox side, the
- clutch disc of which, bearing clutch linings (18), is in torsionally. resistant connection with the input shaft (20) of the manual gearbox (6).

5. A drive arrangement according to any one of claims 1 to 4, characterised in that
- the drive connection of the collar (17) comprises an elastic drive disc (21), which
- is in torsionally-resistant connection in its outer circumferential region via the collar (17) with an axially-immovable thrust ring (22) of the disconnectable clutch (5) on the manual gearbox side joined to the collar (17) with torsional resistance, and in its central region with an intermediate shaft (23) centred relative to the input shaft (20) of the manual gearbox (6),
- whereby the intermediate shaft (23) arranged centred on the internal combustion engine side in a crankshaft (24) is in torsionally-resistant connection with a clutch disc (19'), bearing a clutch lining (18'), of the first disconnectable clutch (3).

6. A drive arrangement according to any one of claims 1 to 5, characterised in that
- a flywheel (25) connected to the crankshaft (24) with torsional resistance serves as an axially-immovable thrust ring (26) for the first disconnectable clutch (3) on the internal combustion engine side, and
- the two disconnectable clutches (3, 5) are identical parts except for the axially-immovable thrust rings (22, 26), whereby
- the disconnectable clutch (5) on the manual gearbox side works in conjunction with a hydraulically-actuatable disengaging device (27) arranged concentrically to the gearbox input shaft (20) on the gearbox housing (7).

7. A drive arrangement according to any one of claims 1 to 6, characterised in that the two hydraulically-actuatable disengaging devices (14, 27) are identical at least in terms of their axial dimensions.

8. A drive arrangement according to any one of claims 1 to 7, characterised in that the axial distance (l_{ST}) between the connection front faces (28, 29) of the adapter flange (8) corresponds to the axial distance (l_{A}) between the two disengaging devices (14, 27) with the disconnectable clutches (3, 5) closed.

9. A drive arrangement according to any one of claims 1 to 8, characterised in that the adapter flange (8) forms an installation unit with the electric motor (4), the disconnectable clutch (5) on the manual gearbox side, the drive disc (21) with the intermediate shaft (23) and the disengaging device (14) oriented on the internal combustion engine side.

10. A drive arrangement according to one or more of claims 5 to 9, characterised in that
- the drive connection of the collar (17) comprises an axially-immovable pressure plate of the disconnectable clutch (5) on the manual gearbox side connected therewith with torsional resistance, whereby
- the pressure plate is in torsionally-resistant connection with the intermediate shaft (23) centred relative to the input shaft (20) of the manual gearbox (6).

11. A drive arrangement according to one or more of claims 4 to 10, characterised in that
- the stator of the electric motor (4) on the adapter flange (8) is arranged in its outer annular flange (10) such that
- the rotor (13) of the electric motor (4) arranged on the collar (17) forms an external rotor.

## Revendications

1. Dispositif de transmission pour véhicules automobiles notamment dispositif de transmission hybride :
- comprenant en série, un moteur à combustion interne (2), un premier embrayage (3), un moteur électrique (4), un second embrayage (5) ainsi qu'une boîte de vitesses (6), dont :
- le carter (7) est relié au moteur à combustion interne (2) par une bride intermédiaire (8) ;
- le stator du moteur électrique (4) étant prévu sur la bride intermédiaire (8),
caractérisé en ce que :
- la bride intermédiaire (8) comporte intérieurement des brides annulaires (10, 11) décalées l'une par rapport à l'autre par un manchon (9),
- le manchon (9) porté par la première bride annulaire (10) montée sur le carter (12) de la bride intermédiaire (8), sert à sa périphérie extérieure à recevoir de manière mobile en rotation le rotor (13) du moteur électrique (4), et
- la seconde bride annulaire (11) prévue radialement à l'intérieur sur le manchon (9) constitue le support d'un dispositif de débrayage (14) pour l'un des embrayages (3, 5).

2. Dispositif de transmission selon la revendication 1, caractérisé en ce que :
- la bride intermédiaire (8) est montée avec la première bride annulaire (10) du côté du moteur à combustion interne, un premier embrayage (3) au voisinage du moteur à combustion interne (2) et une boîte de vitesses (6),
- la seconde bride annulaire (11) comporte un dispositif de débrayage (14) à commande hydraulique, logé dans le manchon (9) et tourné vers l'embrayage (3) du côté du moteur à combustion interne.

3. Dispositif de transmission selon les revendications 1 et 2, caractérisé en ce que :
- le dispositif de débrayage (14) à commande hydraulique est relié à une conduite de commande (15) intégrée à l'une des brides annulaires (10, 11) et au manchon (9),
- cette conduite comportant un branchement (16) prévu dans la paroi de boîtier (12) de la bride intermédiaire (8).

4. Dispositif de transmission selon les revendications 1 à 3, caractérisé en ce que :
- un anneau à collerette (17) monté par l'intermédiaire d'un roulement sur le manchon (9) est relié en liaison d'entraînement par l'intermédiaire du premier embrayage (3) avec le moteur à combustion interne (9) ,
- l'anneau à collerette (17) porte d'un côté le rotor (13) du moteur électrique (4) et de l'autre côté le second embrayage (5) situé du côté de la boîte de vitesses et dont,
- le disque d'embrayage (19) portant la garniture d'embrayage (18) est relié solidairement en rotation à l'axe d'entraînement (20) de la boîte de vitesses (6).

5. Dispositif de transmission selon les revendications 1 à 4, caractérisé en ce que :
- la liaison de transmission de l'anneau à collerette (17) comprend un disque d'entraînement (21) élastique en flexion qui,
- coopère et est relié solidairement en rotation dans la zone de la périphérie extérieure par l'anneau a collerette (17) à un anneau de pression (22) fixe axialement, relié solidairement en rotation à l'anneau à collerette (17), cet anneau de pression de l'embrayage (5) du côté de la boîte de vitesses et dans la zone médiane chaque fois avec un axe intermédiaire (23) centré par rapport à l'axe d'entrée (20) de la boîte de vitesses (6),
- l'axe intermédiaire (23) centré dans un vilebrequin (24) du côté du moteur à combustion interne est relié solidairement en rotation à un disque d'embrayage (19') du premier embrayage (3) et portant la garniture d'embrayage (18').

6. Dispositif de transmission selon les revendications 1 à 5, caractérisé en ce que:
- un volant d'inertie (25) relié solidairement au vilebrequin (24) constitue l'anneau de pression (26) fixe axialement, du premier embrayage (3) du côté du moteur à combustion interne et,
- les deux embrayages (3, 5) sont formés des mêmes pièces à l'exception des anneaux de pression (22, 26), fixes axialement,
- l'embrayage (5) du côté de la boîte de vitesses coopère avec un dispositif de débrayage (27) à commande hydraulique, monté de manière concentrique à l'axe d'entrée (20) de la boîte de vitesses sur le carter (7) de la boîte de vitesses.

7. Dispositif de transmission selon les revendications 1 à 6, caractérisé en ce que les deux dispositifs de débrayage (14, 27) à commande hydraulique ont au moins des dimensions axiales identiques.

8. Dispositif de transmission selon les revendications 1 à 7, caractérisé en ce que la distance axiale (l_{ST}) des faces frontales de raccordement (28, 29) de la bride intermédiaire (8) correspond à la distance axiale (l_{A}) des deux dispositifs de débrayage (14, 27) lorsque les embrayages (3, 5) sont fermes.

9. Dispositif de transmission selon les revendications 1 à 8, caractérisé en ce que la bride intermédiaire (8) forme un ensemble de montage avec le moteur électrique (4), l'embrayage (4) du côté de la boîte de vitesses , du disque d'entraînement (21) et de l'axe intermédiaire (23) ainsi que le dispositif de débrayage (14) situé du côté du moteur à combustion interne.

10. Dispositif de transmission selon l'une ou plusieurs des revendications 5 à 9, caractérisé en ce que la liaison de transmission de l'anneau à collerette (17) comprend une plaque de pression fixe axialement, reliée solidairement en rotation à cet anneau et appartenant à l'embrayage (5) du côté de la boîte de vitesses,
- la plaque de pression étant reliée solidairement en rotation à l'axe intermédiaire (23) centré par rapport à l'axe d'entraînement (20) de la boîte de vitesses (6).

11. Dispositif de transmission selon une ou plusieurs des revendications 4 à 10, caractérisé en ce que :
- le stator du moteur électrique (4) est monté sur la bride intermédiaire (8) au niveau de sa bride annulaire extérieure (10) et ;
- le rotor (13) monté sur l'anneau à collerette (17) forme le rotor extérieur du moteur électrique (4).
